# EUROPEAN PATENT APPLICATION

(11) **EP 2 493 189 A1**
(43) Date of publication of application: **29.08.2012**
(21) Application number: 10824865.9
(22) Date of filing: 15.10.2010
(51) Int. Cl.: H04N 7/173, G09G 5/00, G09G 5/377, H04N 5/445

(54) **VIDEO OUTPUTTING APPARATUS, VIDEO OUTPUTTING METHOD AND PROGRAM**

(30) Priority: 19.10.2009 JP 2009240538
(71) Applicant: Sharp Kabushiki Kaisha, Osaka-shi, Osaka 545-8522 (JP)
(72) Inventor: IWATA Shigeyuki, Osaka-shi Osaka 545-8522 (JP); KIYAMA Jiro, Osaka-shi Osaka 545-8522 (JP)
(74) Representative: Müller - Hoffmann & Partner
(86) International application number: PCT/JP2010/068143
(87) International publication number: WO 2011/049016

(57) **Abstract**

A video outputting apparatus that is provided with a content executing unit that executes a content and generates information regarding the content execution; a subapplication executing unit that executes a subapplication and that generates information regarding the subapplication execution, the subapplication being an pplication to be executed simultaneously with the content; an association determining unit that determines the degree of association between the subapplication currently being executed by the subapplication executing unit and the content currently being executed by the content executing unit, based on at least one of the information regarding the subapplication execution and information regarding the content execution; and a display form deciding unit that decides a display form of the content and the subapplication based on the degree of the association.

## Description

### [Technical Field]

The present invention relates to a video outputting apparatus, a video outputting method, and a program.
The subject application claims priority based on the patent application No. 2009-240538 filed in Japan on October 19, 2009 and incorporates by reference herein the content thereof.

### [Background Art]

In recent years, video outputting apparatuses such as digital broadcast receiving and display devices that output video and are also capable of using a service that provides subapplication, which is an application which is executed simultaneously with the main content of the video outputting apparatus, have increased in number. A subapplication is sometimes referred to as a widget, and specific examples of services that provide widgets include Applicast™ and Yahoo!™. Widgets provided by these services are capable of providing a user with the functions of a news reader, weather forecasts, stock price checking, program schedules, and chatting, and can be used in digital broadcast receiving and display apparatuses that have digital television broadcasts and externally input video as the main content. The term externally input video as used here refers to video that is input to a digital broadcast receiving and display device from an external device (for example, a DVD player or hard-disc recorder) connected by, for example, an HDMI (High-Definition Multimedia Interface) Cable.

In a digital broadcast receiving and display apparatus that can use a widget, although a plurality of widgets can be simultaneously operated together with the reception and display of the main content, in conventional digital broadcast receiving and display apparatus, because the number of widgets that can be displayed at one time on a screen is limited, if a user wishes to use a widget that is not displayed on the screen, the user himself or herself needs, for example, to scroll the display region of the widgets to change and adjust the widgets to the content being viewed.

Additionally, with a conventional video outputting apparatus, widgets are displayed in a row, either below or next to the main contents, and there is the problem that, depending upon the display mode of the video outputting apparatus, it is difficult to view either the widgets or the content.
In order to solve the above-noted problems, there is a display method whereby, based on information provided by a content provider, the user selects the meta information to be displayed on the display screen, so that meta information is displayed in accordance the display form of the display screen (for example, in Patent Reference 1).

### [Prior Art Reference]

### [Patent Reference]

[Patent Reference 1] Japanese Patent Application Publication No. JPA 2005-327121

### [Summary of the Invention]

### [Problem to Be Solved by the Invention]

The prior art is art relating to the meta information displayed on the display screen, and in a video outputting apparatus capable of using a subapplication such as a widget, however, there is the problem of the possible displaying in a display form that is different from the display form desired by the user.
For example, take the case in which, during viewing of a program on a digital broadcast receiving and display apparatus, a user executes a widget that displays time information. Subsequently, in the case in which widgets exceeding the number of widgets that can be displayed on the display screen are executed as a result of a user operation to add a widget, although it is necessary for the digital broadcast receiving and display apparatus to select a widget for display, in the conventional art, in order to select information to display on the display screen from the meta information provided by the content provider, because it is not possible to determine the association from the meta information provided by the program provider, such as the provider and content of the program, there is the problem of the time information displaying widget desired by the user not being displayed.

The present invention was made in consideration of the above-described situation, and has as an object, the provision of a video outputting apparatus, a video outputting method, an a program that display the main content and the subapplication video in a display form that is closer to that which is desired by the user.

### [Means for Solving the Problem]

(1) This invention is for the purpose of solving the above-described problems, an embodiment of the present invention is a video outputting apparatus that has a content executing unit that executes one or more contents and generates information regarding the content execution; a subapplication executing unit that executes one or more subapplications and that generates information regarding the subapplication execution, the subapplication being an application to be executed simultaneously with the content; an association determining unit that determines the degree of association between the subapplication currently being executed by the subapplication executing unit and the content currently being executed by the content executing unit, based on at least one of the information regarding the subapplication execution and the information regarding the content execution; a display form deciding unit that decides a display form of the content and the subapplication, based on the degree of association; a video mixing unit that mixes a video of the content and another video of the subapplication, based on the display form decided by the display form deciding unit; and a video outputting unit that outputs a signal of the video mixed.

(2) The other embodiment of the present invention is also the above-described video outputting apparatus, in which the association determining unit determines the degree of association between the subapplication currently being executed and the content currently being executed, based on not only at least one of the information regarding the subapplication execution and the information regarding the content execution, but also information supplied by a supplier of the subapplication currently being executed and information supplied by a supplier of the content currently being executed.

(3) The other embodiment of the present invention is also the above-described video outputting apparatus that has a plurality of the video mixing unit and a plurality of the video outputting unit, in which the display form deciding unit decides the display form of the content and the subapplication for each of the video outputting unit, based on the degree of association; and each of the video mixing units mixes the content and the subapplication video in accordance with the display form for an associated one of the video outputting units.

(4) The other embodiment of the present invention is also the above-described video outputting apparatus that has an executing-unit-generated information storing unit that holds a history of the information regarding the subapplication execution, a history of the information regarding the content execution, a history of an information supplied by the supplier of the subapplication, and a history of an information supplied by the supplier of the content; in which the association determining unit determines the degree of association between the subapplication currently being executed and the content currently being executed, based on the informations held by the executing-unit-generated information storing unit.

(5) The other embodiment of the present invention is also the above-described video outputting apparatus in which the display form deciding unit decides the display form of the subapplication, based on not only the degree of association but also the information regarding the subapplication execution.

(6) The other embodiment of the present invention is also the above-described video outputting apparatus in which the association determining unit determines, when the content executing unit executes a plurality of contents, the degree of association between the subapplication currently being executed by the subapplication executing unit and one of the contents, the one being mainly displayed among the contents currently being executed by the content executing unit.

(7) The other embodiment of the present invention is also the above-described video outputting apparatus has an executing-unit-generated information storing unit that holds a history of the information regarding the subapplication execution, a history of the information regarding the content execution, a history of an information supplied by the supplier of the subapplication, and a history of an information supplied by the supplier of the content, in which the association determining unit determines the degree of association between the subapplication currently being executed by the subapplication executing unit and the content currently being executed by the content executing unit, based on the informations held by the executing-unit-generated information storing unit.

(8) The other embodiment of the present invention is also a video outputting method in a video outputting apparatus executing a content and a subapplication, which is an application to be executed simultaneously with the content, and outputting a signal of video as the result of execution; the method for outputting video having a first step in which the video outputting apparatus executes one or more contents and generates information regarding the content execution; a second step in which the video outputting apparatus executes one or more subapplications and generates information regarding the subapplication execution; a third step in which the video outputting apparatus determines the degree of association between the subapplication currently being executed at the second step and the content currently being executed at the first step, based on at least one of the information regarding the subapplication execution and the information regarding the content execution; a fourth step in which the video outputting apparatus decides a display form of the content and the subapplication based on the degree of association; a fifth step in which the video outputting apparatus mixes a video of the content and another video of the subapplication, based on the display form decided at the fourth step; and a sixth step in which the video outputting apparatus outputs a signal of the video synthesied.

(9) The other embodiment of the present invention is also a program for having a computer, which is included in a video outputting apparatus having a content executing unit that executes one or more contents and generates information regarding the content execution, operete as: a subapplication executing unit that executes one or more subapplications and generates information regarding the subapplication execution, the subapplication being an application to be executed simultaneously with the content; an association determining unit that determines the degree of association between the subapplication currently being executed by the subapplication executing unit and the content currently being executed by the content executing unit, based on at least one of the information regarding the subapplication execution and the information regarding the content execution; a display form deciding unit that decides a display form of the content and the subapplication based on the degree of association; a video mixing unit that mixes a video of the content and another video of the subapplication based on the display form decided by the display form deciding unit; and a video outputting unit that outputs a signal of the video mixed.

### [Effect of the Invention]

According to the present invention, because display form of the content and the subapplication is decided based on the degree of association between a subapplication currently being executed and the content currently being executed as determined from at least one of the information regarding the execution of the subapplication and the information regarding the execution of content, it is possible to output a video of the main content and another video of the subapplication in a display form that is closer to that desired by the user.

### [Brief Description of the Drawings]

FIG. 1 is a simplified block diagram of the constitution of a widget and content providing system 100 according to an embodiment of the present invention.
FIG. 2 is a simplified block diagram of the constitution of a digital broadcast receiving apparatus 102 according to the same embodiment.
FIG. 3 is a simplified block diagram of the constitution of a digital broadcast receiving apparatus 102a that is a variant example of the digital broadcast apparatus 102 according the same embodiment.
FIG. 4 is a flowchart describing the execution of broadcast program display and widget execution by the digital broadcast receiving apparatus 102 according to the same embodiment.
FIG. 5A is a drawing showing three examples of association calculation equations among the association determining rules in the same embodiment.
FIG. 5B is a drawing showing three examples of elemental value calculation equations among the association determining rules in the same embodiment.
FIG. 6 is a flowchart describing the association determination processing in an association determining unit 212 in the same embodiment.
FIG. 7 is a first example of a display form determination rule in the same embodiment.
FIG. 8 is a second example of a display form determination rule in the same embodiment.
FIG. 9 is a third example of a display form determination rule in the same embodiment.
FIG. 10 is a flowchart describing the display form decision processing of the display form deciding unit 211 in the same embodiment.

### [Embodiments]

### * System Configuration Diagram

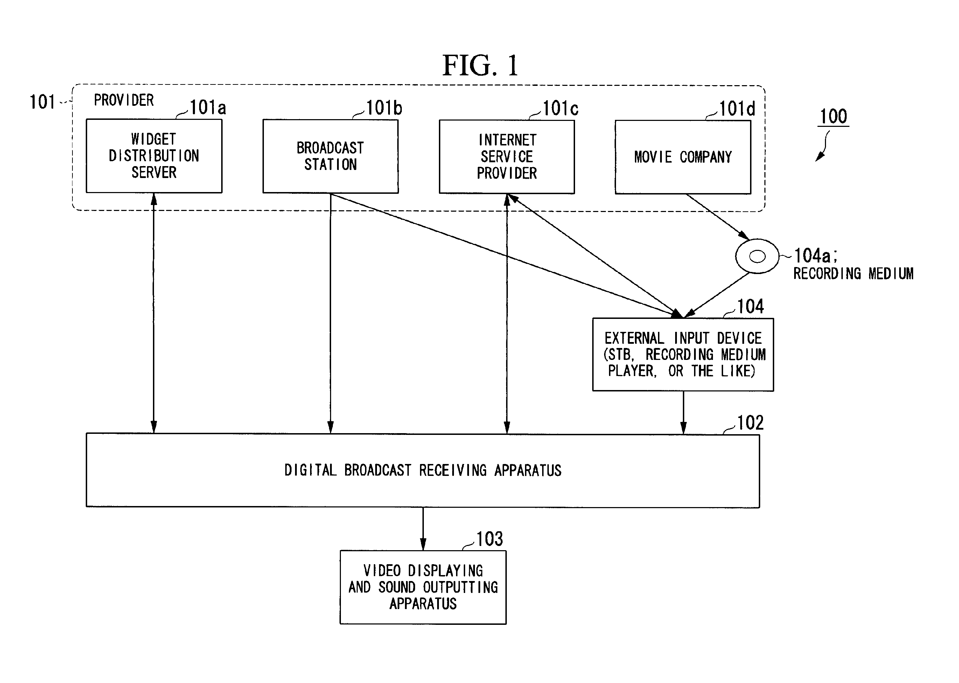

An embodiment of the present invention is described below, with references made to the drawings. FIG. 1 is a simplified block diagram of the widget and content providing system 100 according to an embodiment of the present invention. As shown in FIG. 1, the widget and content providing system 100 of the present embodiment has a provider 101, a digital broadcast receiving apparatus 102, a video displaying and sound outputting apparatus 103, and an external input device 104.

Although a widget distributing server 101 a, a television broadcasting station 101b, an Internet service provider 101c, and a movie company 101d are included in the provider 101, this is not a restriction.
The provider 101 provides content and widgets, which are subapplications, and content to a digital broadcast receiving apparatus 102, via an IF (Internet Protocol) network, a broadcast signal, or the like. The term subapplication as used here refers to an application that is executed and outputs video simultaneously with the content. The digital broadcast receiving apparatus 102, which is the video outputting apparatus in the present embodiment, executes received widgets and content, and outputs a video signal and a sound signal resulting from the execution to the video displaying and sound outputting apparatus 103.

The provider 101 can also provide content to the external input device 104 via the IP network, a broadcast signal, or a recording medium 104a. In this case, content is executed by the external input device 104, and the video signal and sound signal resulting from the execution are output to the digital broadcast receiving apparatus 102. The digital broadcast receiving apparatus 102 mixes the received video signal and sound signal with the result of the execution of the widget and the content, and outputs the result to the video displaying and sound outputting apparatus 103. It is possible to connect two or more video displaying and sound outputting apparatuses 103 to the digital broadcast receiving apparatus 102, and to output the separate video signals and sound signals or the same video signal and output signal to each of the video displaying and sound outputting apparatuses 103.

The video displaying and sound outputting apparatus 103 has a device such as a liquid-crystal display for displaying video and a device such as a speaker for outputting sound and, based on the video signal and sound signal input from the digital broadcast receiving apparatus 102, displays video and outputs sound signal. An external input device 103d is, for example, a set-top box that receives an IP (Internet Protocol) broadcast or cable television, or a recorded medium player that reproduces content recorded on a DVD or memory card, and outputs the video signal and sound signal resulting from reproduction of the content to the digital broadcast receiving apparatus 102.

### * Digital Broadcast Receiving Apparatus Configuration Diagram

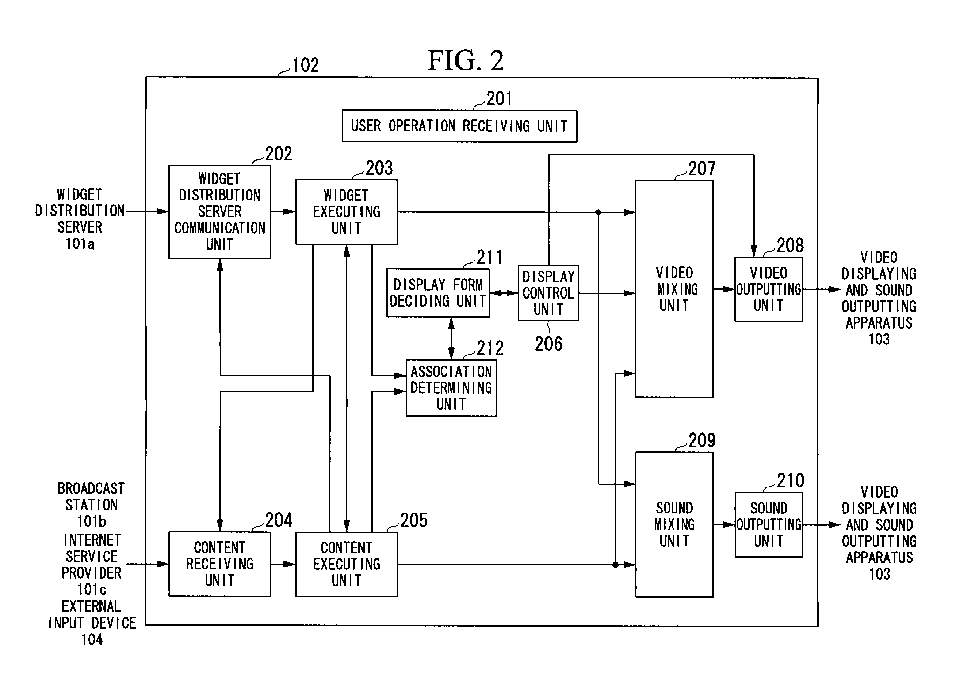

FIG. 2 is a simplified block diagram of the constitution of a digital broadcast receiving apparatus 102 of the present embodiment. As shown in FIG. 2, the digital broadcast receiving apparatus 102 of the present embodiment has a user operation receiving unit 201, a widget distribution server communication unit 202, a widget executing unit 203, a content receiving unit 204, a content executing unit 205, a display control unit 206, a video mixing unit 207, a video outputting unit 208, a sound mixing unit 209, a sound outputting unit 210, a display form deciding unit 211, and an association determining unit 212. In the present embodiment, although the description is for the case in which the digital broadcast receiving apparatus 102 outputs a video signal and a sound signal to the video displaying and sound outputting apparatus 103, the digital broadcast receiving apparatus 102 may be a digital television receiver that has a video displaying and sound outputting apparatus 103.

The user operation receiving unit 201 is, for example, a receiving unit that receives a remote control signal from a remote controller (not shown), receiving various commands, such as widget downloading and execution, from a user, and notifying various parts of the digital broadcast receiving apparatus 102. The widget distribution server communication unit 202, in accordance with an instruction from the user operation receiving unit 201, communicates with the widget distribution server 101a, and downloads the widget to the digital broadcast receiving apparatus 102. The widget distribution server 101 a and the widget distribution server communication unit 202 communicate via the Internet or the like. The widget executing unit 203 executes the downloaded widget and generates information regarding the widget execution. The information regarding the widget execution includes, for example, the starting time of widget execution and executor of the widget, details of which are described later. The widget executing unit 203 can simultaneously execute a plurality of widgets.

The content receiving unit 204, in accordance with an instruction from the user operation receiving unit 201, communicates with the broadcast station 101b, the Internet service provider 101 c, and the external input device 102d, and receives content such as a television broadcast program, an IP broadcast program, a recorded program, or a movie or the like recorded on a DVD. The content executing unit 205 executes the received content and generates information regarding the content execution. The information regarding the content execution includes, for example, the starting time of the content execution and the executor of the content, the details of which are described later. In the case in which the content is multiplexed or encoded, the content executing unit 205 executes the content after separation and decoding. The content executing unit 205 may be enabled to execute a plurality of contents simultaneously. The widget executing unit 203 can issue instructions to the content receiving unit 204 to receive content and to the content executing unit 205 to execute or end content. The content executing unit 205 can issue instruction to the widget distribution server communication unit 202 to download a widget and to the widget executing unit 203 to execute or end a widget.

The video mixing unit 207, under the control of the display control unit 206, mixes the video of the widget and the content executed by the widget executing unit 203 and the content executing unit 205. The video outputting unit 208 outputs the video signal of the video mixed by the video mixing unit 207 to the video displaying and sound outputting apparatus 103. The sound mixing unit 209 mixes the sound of the widget and content executed by the widget executing unit 203 and the content executing unit 205. The sound outputting unit 210 outputs the sound signal of the sound mixed by the sound mixing unit 209 to the video displaying and sound outputting apparatus 103.

The association determining unit 212 determines the degree of the association between the widget currently being executed by the widget executing unit 203 and the content currently being executed by the above-noted content executing unit, based on at least one of the information generated by the widget executing unit 203 regarding the widget execution and the information generated by the content executing unit 205 regarding the content execution. The information generated by the widget executing unit 203 and the content executing unit 205 is described later. The method of determination, by the association determining unit 212, of the degree of the association between the widget and the content is described later. The display form deciding unit 211 obtains the degree of the association between the widget and the content as determined by the association determining unit 212 and, based thereon, decides the display form of the content and the widget. The method of deciding the display form by the display form deciding unit 211 is described later.
The display control unit 206, based on the display form decided by the display form deciding unit 211, controls the video mixing unit 207 and the video outputting unit 208, and adjusts the video resulting from the execution of the content and the widget. The video mixing unit 207 mixes the video resulting from the execution of the content and the widget, and the video outputting unit 208 outputs the mixed result.

### * Variant Example of the Digital Broadcast Receiving Apparatus

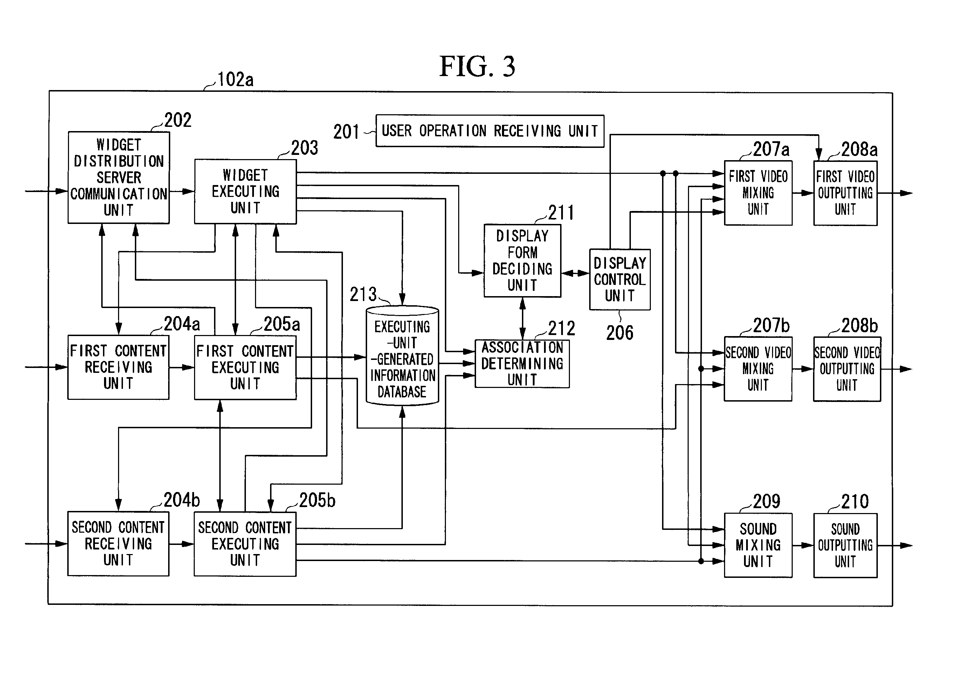

FIG. 3 is a simplified block diagram showing the constitution of the digital broadcast receiving apparatus 102a, which is a variant example of the digital broadcast receiving apparatus 102.

### * Two or More Video Mixing Units and Video Outputting Units

As shown in FIG. 3, the digital broadcast receiving apparatus 102a may have two or more video mixing units 207 and video outputting units 208. The digital broadcast receiving apparatus 102a shown in FIG. 3 has a first video mixing unit 207a and a second video mixing unit 207b, and also a first video outputting unit 208a and a second video outputting unit 208b.

The first video mixing unit 207a mixes the video of the widget executing unit 203, the first content executing unit 205a, and the second content executing unit 205b. In the same manner, the second video mixing unit 207b mixes the video of the widget executing unit 203, the first content executing unit 205a, and the second content executing unit 205b. The digital broadcast receiving apparatus 102a shown in FIG. 3 has a first video outputting unit 208a and a second video outputting unit 208b. The first video outputting unit 208a outputs the video signal of the video mixed by the first video mixing unit 207a, and the second video outputting unit 208b outputs the video signal of the video mixed by the first video mixing unit 207b.

### * Execution Unit Generated Information DB (Database) 213

The digital broadcast receiving apparatus 102a may have an executing-unit-generated information database 213 as shown in FIG. 3. The digital broadcast receiving apparatus 102a shown in FIG. 3 has an executing-unit-generated information database 213 and acquires and stores information regarding widget or content execution that is generated by the widget executing unit 203, the first content executing unit 205a, and the second content executing unit 205b. The information acquired and stored by the executing-unit-generated information database 213 is described in detail later.

### * Two or More Content Receiving Units 204 and Content Executing Units 205

The digital broadcast receiving apparatus 102a of the present embodiment may have two or more content receiving units 204 and content executing units 205, as shown in FIG. 3. The digital broadcast receiving apparatus 102a shown in FIG. 3 has a first content receiving unit 204a and a second content receiving unit 204b. The first content receiving unit 204a and the second content receiving unit 204b can each receive separate content. For example, the first content receiving unit 204a can receive a terrestrial digital broadcast transmitted from the broadcast station 101b, and the second content receiving unit 204b can receive information output from the external input device 104.

The digital broadcast receiving apparatus 102a shown in FIG. 3 also has a first content executing unit 205a and a second content executing unit 405b. The first content executing unit 205a executes the content received by the first content receiving unit 204a, and the second content executing unit 205b executes the content received by the second content receiving unit 204b.

### * Extraction of Information Provided by a Widget Provider

The widget executing unit 203 may be made to extract information imparted to a widget by the widget provider. The information imparted to the widget is described later.

### * Extraction of Information Provided by a Content Provider

The content executing unit 205 may be made to extract information imparted to the content by the content provider. The information imparted to the content is described later.

### * Broadcast Program Execution Flow of the Digital Broadcast Receiving Apparatus 102

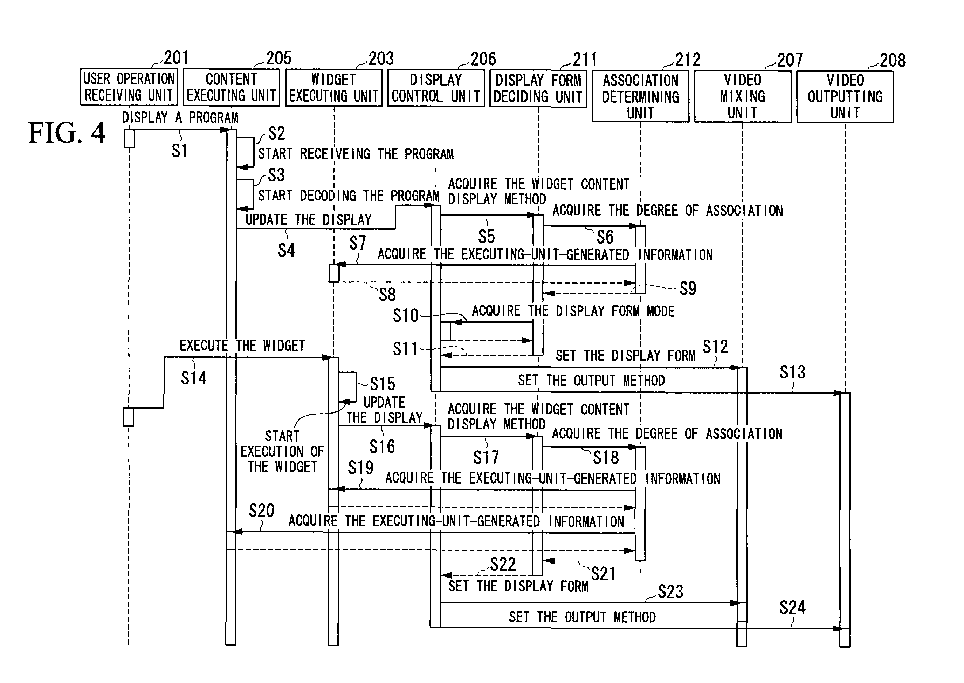

FIG. 4 is a flowchart describing the processing for execution of broadcast program display and widget execution by the digital broadcast receiving apparatus 102. The sequence for the case of the digital broadcast receiving apparatus 102 executing a broadcast program will be described first. When the remote controller that has detected that the user has pressed a channel button transmits a remote control signal that issues an instruction to display the channel of the pressed channel button, the user operation receiving unit 201, upon receiving the remote control signal, notifies the content executing unit 205 and the content receiving unit 204 of the instruction to display a program responsive to the received remote control signal (S1). Upon receiving the notification, the content receiving unit 204 starts receiving the program (S2), and the content executing unit 205 decodes the received program (S3).

Next, the content executing unit 205 notifies the display control unit 206 of the instruction to update the display (S4). The display control unit 206 requests the optimum from the display form deciding unit 211 (S5; widget content display method acquisition request). Upon receiving the request for the display form, the display form deciding unit 211 requests the degree of the association between the currently executed widget and the content to be displayed from the association determining unit 212 (S6). The association determining unit 212 requests information generated by the widget executing unit 203 from the widget executing unit 203 (S7; executing-unit-generated information acquisition request). At this point, because no widget is being executed, the widget executing unit 203 notifies the association determining unit 212 that no widget is being executed (S8). Next, because no widget is being executed, the association determining unit 212 notifies the display form deciding unit 211 that it cannot determine the degree of the association between the widget and the content (S9).

Next, upon being notified that it is not possible to determine the degree of the association, the display form deciding unit 211 decides the display form from the current content display form, using a conventional method. In order to do this, the display form deciding unit 211 acquires the current display form from the display control unit 206 (S 10; display form mode acquisition). The display form deciding unit 211 notifies the display control unit 206 of the decided display form, based on the acquired display form (S 11). The content display forms include such forms as a full-screen mode in which one content is displayed on a full screen, and a two-screen mode in which two contents are displayed simultaneously. In a conventional method of deciding the display form, when the current display form is the full-screen mode, for example, the display form of the program of which the decoding is started at sequence S3 is made the full-screen mode, and when the current display form is the two-screen mode, the display form is such that the display of the active content of the two contents is swapped with the display of the program of which the decoding is started at sequence S3. Next, the display control unit 206 instructs the video mixing unit 207 regarding the display form (12; display form setting). The display control unit 206 also instructs the video outputting unit 208 regarding the method of outputting the video, such video output destination (S 13; output method setting).

Next, the sequence in the case in which the digital broadcast receiving apparatus 102 executes a widget will be described. In the case, it will be assumed that the widget distribution server communication unit 202 has downloaded a plurality of widgets beforehand. Upon detecting a button operation that selects one widget of the downloaded widgets, the remote controller transmits a remote control signal responsive to the button operation, at which point, upon receiving the remote control signal, the user operation receiving unit 201 commands the widget executing unit 203 to execute the widget selected by the button operation (S 14). The widget executing unit 203 starts execution of the widget (S 15).

Next, the widget executing unit 203 issues a command to the display control unit 206 to update the display (S16). The display control unit 206 requests the optimum display form from the display form deciding unit 211 (S17; widget content display method acquisition request). The display form deciding unit 211 requests the degree of the widget and content association from the association determining unit 212 (S 18). The association determining unit 212 acquires information generated by the widget executing unit 203 from the widget executing unit 203 (S 19; executing-unit-generated information acquisition request). Next, the association determining unit 212 acquires the information generated by the content executing unit 205 with respect to the content executing unit 205 (S20; executing-unit-generated information acquiring request).

Next, the association determining unit 212, from the acquired information generated by the widget executing unit 203 and generated by the content executing unit 205, determines the degree of the association between the content and the widget, and notifies the display form deciding unit 211 (S21). The display form deciding unit 211, from the degree of the association notified from the association determining unit 212, decides the optimum display form and notifies the display control unit 206 (S22). The display control unit 206 instructs the video mixing unit 207 regarding the display form (S23; display form setting). The display control unit 206 also instructs the video outputting unit 208 regarding the video output destination (S24; video output method setting).
In the sequences of S16 and thereafter, although the sequence shown is the sequence for updating the display form in the case in which a widget is executed when only content is being executed, the content and widget display form is decided in the same manner as in sequence S 16 and thereafter for such cases as the case in which a widget is re-executed, the case in which the displayed content is changed, the case in which the display form of the content (full-screen mode, two-screen mode, and the like) is changed, the case in which the active content is changed, and the case in which the active widget is changed.

### * Information Generated by the Widget Executing Unit 203

The information generated by the widget executing unit 203 of the present embodiment regarding the widget execution will now be described. The information regarding the widget currently being executed that is generated by the widget executing unit 203 is the module that instructs the download/execution/ending of the widget, the interaction with content, the starting/ending execution time, the amount of execution time, the starting/ending display time, the amount of display time, and the number of operations.

### * Information Generated by the Content Executing Unit 205

The information generated by the content executing unit 205 of the present embodiment regarding the content execution will now be described. If the content is a terrestrial digital broadcast program, the information generated by the content executing unit 205 for the program currently being decoded is the program mode (normal mode/data broadcast mode), status (active/inactive), the module that instructs the program execution/ending, the starting/ending display time, and the amount of display time.

### * Information Provided by the Widget Provider

The provider-provided information imparted to the widget by the widget provider will now be described. The provider-provided information regarding the widget is, for example, the widget creator, name, description, and contact information for inquiries. In the present embodiment, this provider-provided information regarding the widget is received by the widget distribution server communication unit 202 from the widget distribution server 101a, and acquired by the widget executing unit 203. The provider-provided information regarding the widget may be acquired by another method, such as by reception from an information distribution server provided by the provider.

### * Information Provided by the Content Executor

The provider-provided information provided by the content provider will now be described.
The provider-provided information regarding the content is, for example, the name of the broadcast station and broadcast time, the title, the genre, the cast, the description, and intended age of viewers in the case in which the content is a broadcast program, the video data specifications, the sound data specifications, the subtitle data specifications, and the copy control specifications. This information, in the case of, for example, a terrestrial broadcast, is included in the SI/PSI (Service Information/Program-Specific Information). The provider-provided information regarding the content is received by the content receiving unit 204 from the broadcast station 101b or Internet service provider 101c, and acquired by the content executing unit 205.

### * Information Stored by the Executing Unit Generated Information Database 213

The information stored by the executing-unit-generated information database 213 of the present embodiment will now be described.
The executing-unit-generated information database 213 stores information generated by the widget executing unit 203, information generated by the content executing unit 205, the provider information provided by the widget provider and extracted by the widget executing unit 203, and the provider information provided by the content provider and extracted by the content executing unit 205. By doing this, from the information stored in the executing-unit-generated information database 213, it is possible for the association determining unit 212 to know, for example, together with what content a widget currently executed by the widget executing unit 203 was executed in the past, and to determine from that information the degree of the association between the widget and the content.

### * Association Determining Unit 212

The association determining unit 212 of the present embodiment will now be described. The association determining unit 212 determines the degree of the association between a widget currently being executed by the widget executing unit 203 and the content currently being executed by the content executing unit 205, based on at least one of the information regarding the widget execution and the information regarding the content execution, using the association determination rules, which are described later.

The degree of the association between the widget and the content is indicated, for example, by a value, the association between the widget and the content being stronger, the greater is the value. It is possible for the association determining unit 212 to determine at one time the association between a plurality of contents and a widget or a plurality of widgets and a content, in which case the degree of associations of a widget or a content may be indicated as a ranking among a plurality of contents or a plurality of widgets.

### <Association Determining Rules>

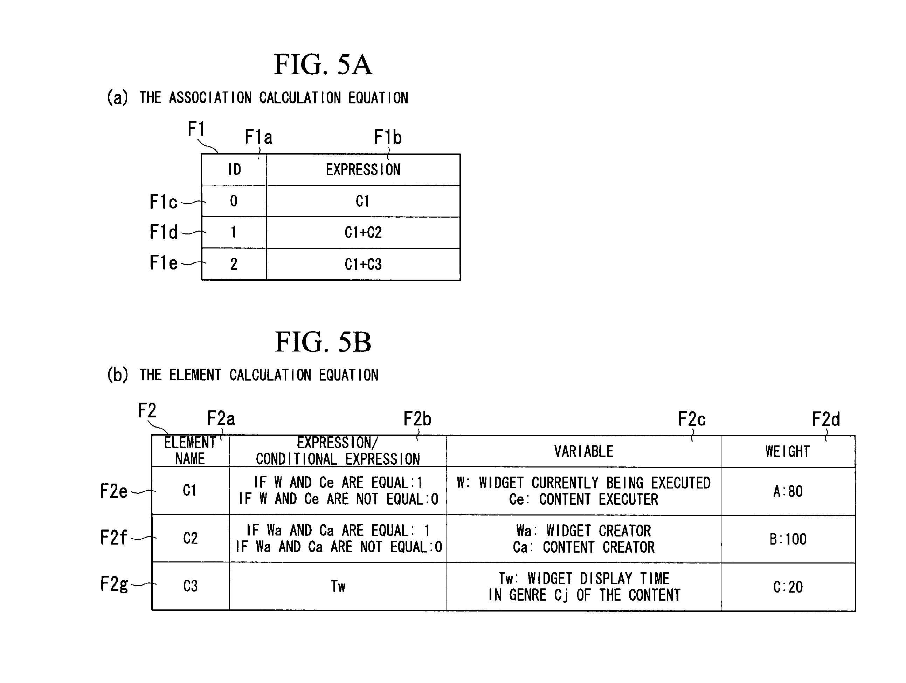

Next, the association determining rules will be described. The association determining rules are information held by the association determining unit 212 and used for determining the degree of association between a widget and content. FIG. 5A and FIG. 5B are drawings showing three examples of association determining rules in the present embodiment. The degree of an association that satisfies a user is calculated by these. The association determining rules in the present embodiment are constituted by the association calculation equation F1 shown in FIG. 5A and the element calculation equation F2 shown in FIG. 5B. The association calculation equation F1 is an expression for calculating the degree of the association between a widget and content, and the element value calculation equation F2 is an expression for calculating the values of various elements used in the association calculation equation F1.

The element value calculation equation F2 is constituted by the element name F2a, the expression F2b, the variable F2c, and the weight F2d. The element name F2a is uniquely assigned to each element. The expression F2a is an expression or a conditional expression for calculation of the value of various elements. The variable F2c is a variable used in expression F2a. The weight F2d indicates the weight of the various elements, and is a value by which the result of calculation by the expression F2a is multiplied.

### * The Case of Using Information Generated by the Content Executing Unit

The association determining rules for the case of the association determining unit 213 determining the degree of the association between a widget currently being executed by the widget executing unit 203 and the content currently being executed by the content executing unit 205, based on at least one of the information regarding the widget execution and the information regarding the content execution will now be described, with references made to FIG. 5A and FIG. 5B. The association calculation equation Flc is an example of an association determining rule for the case of determining based on information regarding the content execution. In the case of the two-screen mode or the like, in which the content executing unit 205 is executing a plurality of contents, the association determining unit 213 determines the degree of the association between each of the widgets currently being executed by the widget executing unit 203 and the main content being displayed of the plurality of contents currently being executed by the content executing unit 205. In this case, the main content being displayed refers, for example, to the active content selected by the user of the contents being displayed in the two-screen mode.

The association calculation equation Flc is an association determining rule that determines that the association between a widget and content is strong in the case in which a content currently being executed is executed by a widget currently being executed. This enables calculation of the degree of the association that better satisfies the user. First, the element value calculation equation F2e that calculates the element C1 of the association calculation equation F1c will be described. The element name of the element value calculation equation F2e is Cl, and the value of element Cl is calculated from the expression F2b, the variable F2c, and the weight F2d of the element value calculation equation F2e. The element Cl is calculated using two variables, these being the widget W currently being executed and the executor Ce of the content. According to the expression F2b of element Cl, if the variables W and Ce are equal, 1 is calculated, and if variable W and Ce are not equal, 0 is calculated. The value calculated by the expression F2b of the element Cl is further multiplied by the weight F2d, that is, by 80, the result being the value of the element Cl. In this case, the content executor Ce is information regarding the content execution.

Next, the association calculation equation Flc will be described.
The degree of the association between the widget and the content is calculated by the expression Flb of the association calculation equation Flc. According to the expression Flb of the association calculation equation Flc, the degree of the association is the above-described value of the element Cl. The larger the value, the stronger is the association, and the smaller the value, the weaker is the association.

### * The Case of Using Information Provided by the Content Provider and Information Provided by the Widget Provider

The association determining unit 213 may determine the degree of the association between the widget currently being executed by the widget executing unit 203 and the content currently being executed by the content executing unit 205, using not only at least one of information regarding the widget execution and information regarding the content execution, but also information provided by the provider of the content currently being executed and information provided by provider of the widget currently being executed. The association calculation equation Fld is an example of the case of determining the degree of the association using information regarding the content execution, information provided by the content provider, and information provided by the widget provider.

The association calculation equation Fld is element Cl + element C2, and is the association calculation equation that, in addition to the above-described element Cl, when the creator of the content current being executed is the same as the creator of the widget currently being executed, judges that the association between the widget and the content is strong. This enables calculation of the degree of the association that better satisfies the user. The element value calculation equation F2f for the element C2 used in the association calculation equation Fld will first be described.

The element name of the element value calculation equation F2f is C2, and the value of the element C2 is calculated from the expression F2b, the variable F2c, and the weight F2d of the element value calculation equation F2f. The element C2 is calculated using two variables, these being the widget creator Wa, which is information provided by the widget provider, and the content creator Ca, which is information provided by the content provider. The information Wa provided by the widget provider and the information Ca provided by the content provider are extracted from the widget executing unit 203 and content executing unit 205. According to the expression F2b of element C2, if the variables Wa and Ca are equal, 1 is calculated, and if the variables Wa and Ca are not equal, 0 is calculated. The value calculated by the expression F2b of the element C2 is further multiplied by the weight F2d, that is, by 100, the result being the value of the element C2.

Next, the association calculation equation Fld will be described.
The degree of the association between the widget and the content is calculated by the expression Flb of the association calculation equation Fld. According to the expression Flb of the association calculation equation Fld, the degree of the association is the sum of the value of the above-described C1 and the value of the above-described C2. The larger the value, the stronger is the association, and the smaller the value, the weaker is the association.

### * The Case of Determination Based on Information Held in the Executing Unit Generated Information Database 213

The association determining unit 213 may determine the degree of the association between the widget currently being executed by the widget executing unit 203 and the content currently being executed by the content executing unit 205, based on information held in the executing-unit-generated information database 213. The association calculation equation Fle is an example of the case of determining the degree of the association using information held in the executing-unit-generated information database 213.

The association calculation equation Fle is the association determining equation that, in addition to the above-noted element Cl, when the display time of a widget in the genre of the content currently being executed is long, judges that the association between the content and the widget that are currently being executed is strong. This enables calculation of the degree of the association that better satisfies the user. The element value calculation equation F2g of the association calculation equation Fle will first be described. The element name of the element value calculation equation F2g is C3, and the value of the element C3 is calculated from the expression F2b, the variable F2c, and the weight F2d of the element value calculation equation F2g.

The element C3 is calculated using one variable, the display time Tw of a widget in the genre of the content, Cj. The content genre Cj is extracted by the content executing unit 205 and stored in the executing-unit-generated information database 213, and the display time of the widget that is currently executing a content of genre Cj is extracted by the widget executing unit 203 and stored in the executing-unit-generated information database 213. According to the expression F2e of the element C3, the display time Tw of the widget in the genre Cj itself becomes the calculation result, this being further multiplied by the weight F2d, that is, by 20, the result being the value of the element C3.

Next, the association calculation equation Fle will be described.
The degree of the association between the widget and the content is calculated by the expression Flb of the association calculation Fle. According to the expression F2b of the association calculation equation Fle, the degree of the association is the value of the sum of the value of the above-described Cl and the value of the above-described C3. The larger the value, the stronger is the association, and the smaller the value, the weaker is the association.

### <Association Determining Flowchart>

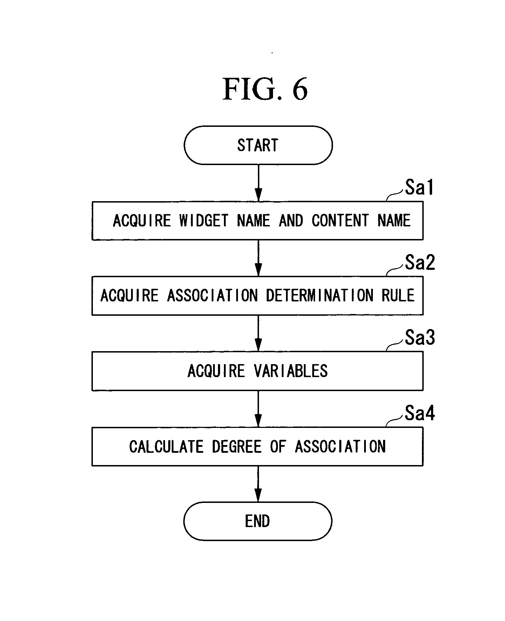

FIG. 6 is a flowchart describing the association determination processing in the association determining unit 212 in the present embodiment. The association determining unit 212 acquires the name of the widget and the name of the content for which association degree is to be determined (Sal). Next, the association determining unit 212 references the association determining rules shown in FIG. 5A and FIG. 5B (Sa2). Although the three association calculation equations Flc, Fld, and Fle are shown as the association determining rules in FIG. 5A and FIG. 5B, it is sufficient to provide at least one of these. When a plurality thereof are provided, which one of the association calculation equations is to be used is decided by, for example, specification by the user. Next, the association determining unit 212 acquires the variables shown in the association determining rules (Sa3). Next, the association determining unit 212 calculates the degree of the association between the widget and the content, based on the calculation equation shown in the association determining rules (Sa4), and ends the processing.

### * Display Form Deciding Unit 211

The display form deciding unit 211 in the present embodiment will now be described.
The display form deciding unit 211, based on the degree of the association acquired from the association determining unit 212, decides the display form when displaying content and a subapplication. The display form deciding unit 211, when deciding the display form, uses the display form determination rules held in the display form deciding unit 211. The display form deciding unit 211 may decide the display form based on the degree of the association acquired from the association determining unit 212 and also on the information regarding the widget execution. This enables determination of a display form that better satisfies the user.

### * Display Form Determination Rules

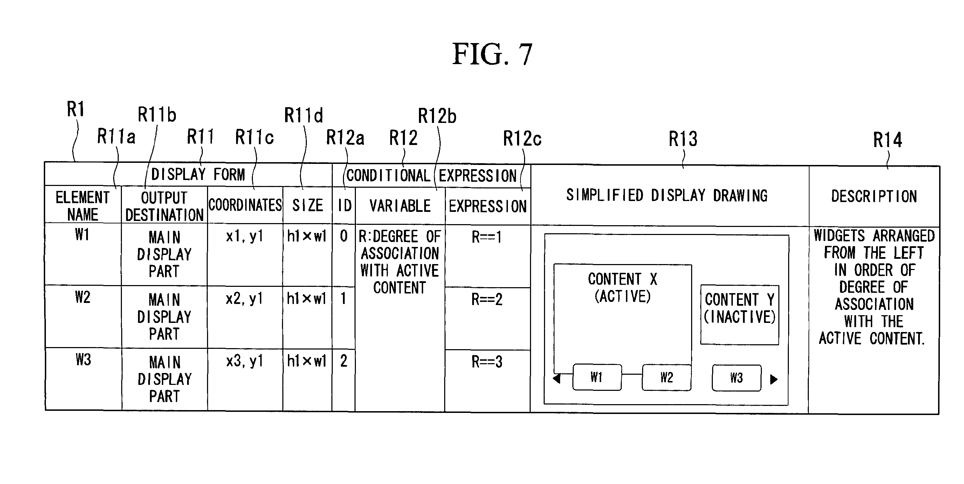

FIG. 7 is a first example of a display form determination rule in the present embodiment. A display form determination rule is information that is held in the display form deciding unit 211, and that is used in determining the widget and content display method. The display form determination rule R1, which is the first example shown in FIG. 7, is constituted by the conditional expression R12 and display form R11 under each of the conditions. The simplified display drawing R13 and the description R14 are for the purpose of supplementing the description of the display form determination rule R1 in the present embodiment.

The conditional expression R12 is constituted by the ID R12a, the variable R12b, and the expression R12c. The ID R12a is a number that is uniquely assigned to each of the conditions. The expression R12c is a conditional expression for the purpose of determining the optimum display form, and the variable R12b is a variable used in the expression R12c. The display form R11 is information that indicates the display form of the widget and the content, and is constituted by the element name R11 a, the output destination R11b, the coordinates R11c, and the size R11d.

### * The Case of deciding the Widget Display Form based on the Degree of Association

The case of deciding the display form of a widget based on the degree of association acquired from the association determining unit 212 will now be described, with references made to FIG. 7. The display form determination rule R1 is an example of the case of determining the display form of a widget based on the degree of association acquired from the association determining unit 212. The display form determination rule R1, as shown in the simplified display drawing R13, is a rule that, in the two-screen output mode in which a main active content and an inactive content are simultaneously executed, selects widgets having a strong association with the active content and arranges them from the left. In accordance with the display form determination rule R1, even in the case in which the number of widgets currently being executed exceeds the number of widgets that can be displayed on the screen, by selecting widgets for display from the degree of their association with the active content, it is possible to provide the optimum widgets to the user.

The conditional expression R12 of the display form determination rule R1 will first be described.
The conditional expression R12 of the display form determination rule R1 of FIG. 7 is constituted by the three conditions, these being the cases in which the value of ID R12a is 0, 1, and 2. The variable R12b is the ranking of the degree of the association between the active content and the widget acquired from the association determining unit 212. The expression R12c evaluates which, of the first, second, and third ranks is the degree of the associations each of the widgets. That is, if the value of ID R12a is 0, the display form for a first ranked widget is defined, if the value is 1, the display form for a second ranked widget is defined, and if the value is 2, the display form for a third ranked widget is defined.

Next the display form R11 in the display form determination rule R1 will be described.
The display form R11 indicates the position and the output destination for a widget satisfying each condition, and is constituted by the element name R11a, the output destination R11b, the coordinates R11c, and the size R11d. The element name R11a is an ID that is uniquely assigned to the widgets to be displayed. As shown in FIG. 7, the element name of a first ranked widget is W1, that of a second ranked widget is W2, and that of a third ranked widget is W3.

The output destination R11b indicates a display device to which each element is output. With display form determination rule R1, each of the elements W1, W2, and W3 is output to the main display unit of the video displaying and sound outputting apparatus 103. The coordinates R11c indicate the positions of each element on the display device. With the display form determination rule R1, the upper-left of the display unit is taken as the origin (0, 0), the rightward direction is taken as the x axis, and the downward direction is taken as the y axis. With the display form determination rule R1, the elements W 1, W2, and W3 are positioned in the sequence (x1, y1), (x2, y1), (x3, y1). In this case, x1<x2<x3. That is, the elements W1, W2, and W3 are arranged from the left. The size R11d indicates the size of each element on the display device. With the display form determination rule R1, all of the elements W1, W2, and W3 are displayed with a width of w1 and a height of h1.

### * The Case of Determining the Display Form of a Content Based on the Degree of Association

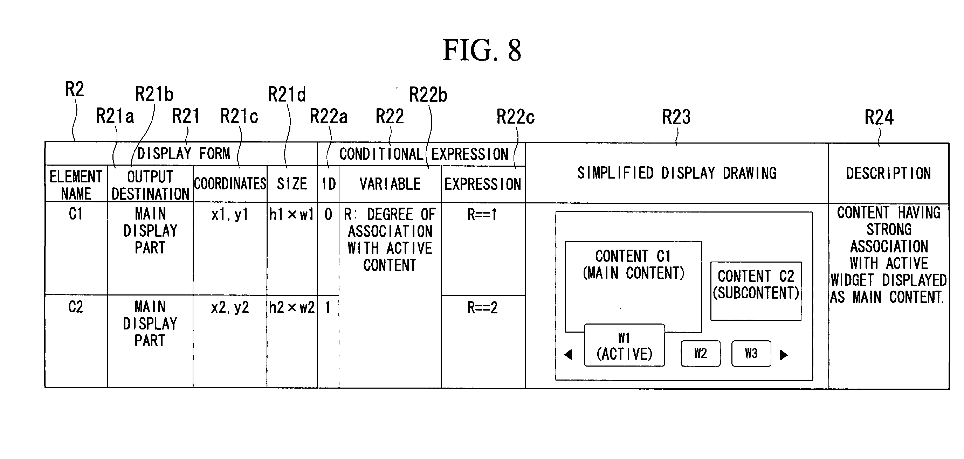

FIG. 8 is a second example of a display form determination rule in the present embodiment. The display form determination rule R2, which is the second example shown in FIG. 8, is an example of the case of deciding the content display form based on degree of association acquired from the association determining unit 212. The display form determination rule R2, as shown in the simplified display drawing R23, is a rule that, in the two-screen output mode in which a main active content and an inactive content are simultaneously executed, selects content having a strong association with the active widgets currently being executed by the user. In accordance with the display form determination rule R2, by making the content that happens to have a strong association with the active widgets the main content, it is possible to achieve a display form that satisfies the user.

The conditional expression R22 of the display form determination rule R2 will first be described.
The conditional expression R22 of the display form determination rule R2 of FIG. 8 is constituted by three conditions, these being the cases in which the value of ID R22a is 0, 1, and 2. The variable R22b is the ranking of the degree of the association between the active widget and the content acquired from the association determining unit 212. The expression R22c evaluates which, of the first and second ranks is the degree of the associations of each of the contents. That is, if the value of ID R22a is 0, the display form for a first ranked content is defined, and if the value is 1, the display form for a second ranked content is defined.

Next, the display form R21 of the display form determination rule R2 will be described.
The display form R21 of the display form determination rule R2 indicates the position and the output destination for a content satisfying each condition, and is constituted by the element name R21a, the output destination R21b, the coordinates R21c, and the size R21d. The element name R21a is an ID that is uniquely assigned to the contents to be displayed. The output destination R21b indicates a display device to which each element is output. With the display form determination rule R2, both the elements C 1 and C2 are output to the main display unit of the video displaying and sound outputting apparatus 103.

The coordinates R21c indicate the positions of each element on the display device. With the display form determination rule R2, the upper-left of the television is taken as the origin (0, 0), the rightward direction is taken as the x axis, and the downward direction is taken as the y axis, and the positioning of C1 at the main content position of (x1, y1) and C2 at the subcontent position of (x2, y2) is indicated. The size R24d indicates the size of each element on the display device. With the display form determination rule R2, the element C1 is displayed with a width of w1 and a height of h1, and the element C2 is display with a width of w2 and a height of h2. In this case, x1<x2, y1<y2, w1>w2, and h1>h2.

### * The Case of Deciding the Display Form Based on Information regarding a Widget Execution

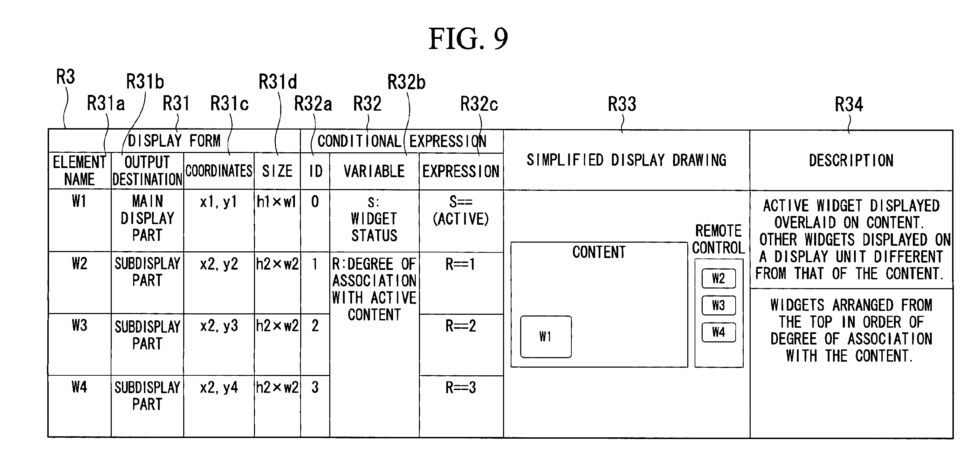

FIG. 9 is a third example of a display form determination rule of the present embodiment. The display form determination rule R3, which is the third example of the case of deciding the content display form, based on information regarding widget execution generated by the widget execution unit 203, in addition to the degree of the association. The display form determination rule R3, as shown in the simplified display drawing R33, is a rule that decides a display form of a content and widget output from each of a plurality of video outputting units (first video outputting unit 208 and second video outputting unit 208b).

The display form determination rule R3 is a rule that causes an active widget to be displayed in a main display part of a first display device connected to the first video outputting unit 208a, that is, the main video displaying and sound outputting apparatus 103, which displays the content. It is also a rule to cause an inactive widget to be displayed in a subdisplay part of the video displaying and sound outputting apparatus 103, that is a second display device connected to the second video outputting unit 208b, or the different video displaying and sound outputting apparatus 103 from the first display device, for example, a display device of a remote controller, in the ranking of the degree of the association with the contents. It is possible to achieve a display form that satisfies the user such that the display form determination rule R3 displays only an active widget that is currently operated by the user on the first display device together with the content, displaying the other widget on the second display device for easy viewing by the user. The first video mixing unit 207a and the second video mixing unit 207b mix the video of the content and the video of the widget of the decided display form, in accordance with the display form of the associated video outputting unit (first video outputting unit 208a and second video outputting unit 208b).

First, the conditional expression R32 of the display form determination rule R3 will be described.
The conditional expression R32 of the display form determining rule R3 of FIG. 9 is constituted by four conditions, these being the cases in which the value of ID R32a is 0, 1, 2, and 3. The variable R33b for which the ID R32a is 0 is the status of the widget acquired from the widget executing unit 203, identifying whether it is the active status indicating that the user is currently operating, or the inactive status, indicating another status. The variable R33b for which ID R32a is 1, 2, and 3 is the ranking of the degree of the association between the active content and the widget acquired from the association determining unit 212.

The conditional expression R32c for which ID R32a is 0 evaluates whether the widget status is active or inactive. The conditional expression R32c for which ID R32a is 1, 2, and 3 evaluates which, of the 1st, 2nd, and 3rd ranks is the degree of the association of each of the widgets. That is, if the value of ID R32a is 0, the display form for an active widget is identified, if the value is 1, the display form for a first ranked widget is defined, if the value is 2, the display form for a second ranked widget is defined, and if the value is 3, the display form for a third ranked widget is defined.

Next, the display form R31 of the display form determination rule R3 will be described.
The display form R31 of the display form determination rule R3 in FIG. 9 indicates the position and the output destination for a widget satisfying each condition, and is constituted by the element name R31a, the output destination R31b, the coordinates R31c, and the size R31d. The element name R31a is an ID that is uniquely assigned to the widgets to be displayed.

The output destination R31b indicates a display device to which each element is output. The display form determination rule R3 outputs an element W1 to the main display part, and outputs W2, W3 and W4 to the subdisplay part. The coordinates R31c indicate the position of each element on the display device. With the display form determination rule R3, the upper-left of the main display part is taken as the origin (0, 0), the rightward direction is taken as the x axis, and the downward direction is taken as the y axis, and W1 is positioned at (x1, y1). Taking the upper-left of the subdisplay part as the origin (0, 0), the rightward direction as the x axis, and the downward direction as the y axis, the W2, W3, and W4 are positioned from the top at (x2, y2), (x2, y3), and (x2, y4). Also, in this case, y2<y3<y4. The size R34d indicates the size on the display device of each of the elements. The display form determination rule R3 displays the element W1 with the width of w1 and the height of h1, and the elements of W2, W3 and W4 with the width of w2 and the height of h2.

### * Flow of Display Form Deciding Unit 211

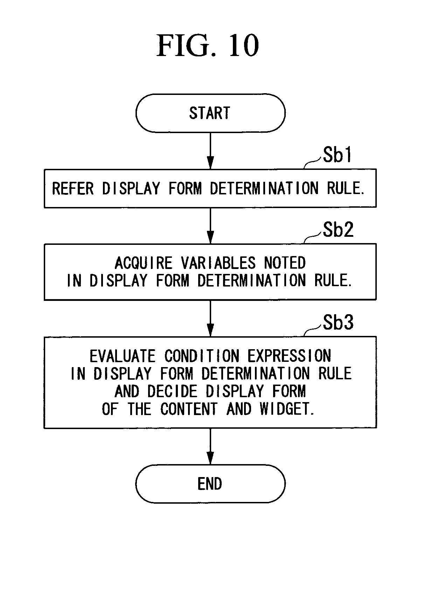

FIG. 10 is a flowchart describing the display form decision processing of the display form deciding unit 211 of the present embodiment. First, the display form deciding unit 211 refers to a display form determination rule (Sb2). Next, the display form deciding unit 211 acquires variable values that are described in the display form determination rule from the association determining unit 212 (Sb2). The display form deciding unit 211 may acquire the variable values not only from the association determining unit 212 but also from the widget executing unit 203. Next, the display form deciding unit 211 evaluates the conditional expression described in the display form determination rule, decides the display form of the content and the widget (Sb3), and ends the processing.

By doing this, because the digital broadcast receiving apparatus 102 determines the degree of the association between the widget currently being executed and the content currently being executed, based on at least one of the information regarding the widget execution and the information regarding the content execution, and decides the display form of the content and the widget based on the degree of the association, a widget, for example, which is more strongly associated with the content of a plurality of widgets when the content is switched, is prioritized in position on the display, thereby enabling output of the main content and the widget video in a display form that is closer to that desired by the user.

Also, by doing this, because the digital broadcast receiving apparatus 102 determines the degree of the association based on information supplied by a supplier of the widget currently being executed and information supplied by a supplier of the content currently being executed in addition to at least one of the information regarding the widget execution and the information regarding the content execution, and decides the display form of the content and the widget based on the degree of the association, a widget, for example, in which there is matching with the creator, which is information supplied by the supplier of a plurality of widgets when the content is switched, is prioritized in position on the display, thereby enabling output of the main content and the widget video in a display form that is closer to that desired by the user.

By doing this, even if the digital broadcast receiving apparatus 102a has a plurality of video outputting destinations or executes a plurality of contents, it is possible to output the main content and the widget video in a display form that is closer to that desired by the user.

Also, by doing this, because the digital broadcast receiving apparatus 102a can determine the degree of the association based on the history of the information regarding the widget execution hold by the executing-unit-generated information database 213, the information regarding the content execution, the information supplied by a supplier of the widget, and the information supplied by a supplier of the content, for example, based on a history executing the content currently being executed and the widget currently being executed, a long-time widget, which has been executed together with the content currently being executed, is prioritized in position on the display, thereby enabling output of the main content and the widget video in a display form that is closer to that desired by the user.

Also, by doing this, because the digital broadcast receiving apparatus 102 decides the display form of the widget, in addition to the degree of the association, based on information regarding the widget execution, by using, for example, the information indicating whether or not the widget is active, as the information regarding the widget execution, even if the content is switched and the association between the widget and the content weakens, the active widget is displayed as is or the like, thereby enabling output of the main content and the widget video in a display form that is closer to that desired by the user. By doing this, when a certain user inputs text information into a widget having a memo pad function, in the case in which the display form of the digital broadcast receiving apparatus 102 is changed, problems in which arrangement of the widget currently inputting the text information is changed and it becomes difficult for user to input text information successively can be prevented.

A program for the purpose of implementing the functions of the widget executing unit 203, the content executing unit 205, display control unit 206, video mixing unit 207, sound mixing unit 209, display form deciding unit 211 and the association determining unit 212 in FIG. 2, and also the widget executing unit 203, the first content executing unit 205a, the second content executing unit 205b, the display control unit 206, the first video mixing unit 207a, the second video mixing unit 207b, the sound mixing unit 209, the display form deciding unit 211 and the association determining unit 212 in FIG. 3 may be recorded on a computer-readable recording medium, and a computer system provided with the video outputting apparatus 102 or the video outputting apparatus 102a may be caused to read and execute the program recorded on the record medium, thereby performing the processing according to each of the functions. Also, dedicated hardware may perform all or part of the processing according to these various parts. The term "computer system" used herein includes an operating system and also hardware such as peripheral devices.

The term "computer system" also includes a webpage-providing environment (or display environment) if the WWW system is used.
The term "computer-readable recording medium" refers to a portable medium, such as a flexible disk, an optical-magnetic disc, a ROM, and a CD-ROM, and a storage device, such as a hard disk that is built into a computer system. Additionally, the term "computer-readable recording medium" includes something that dynamically retains a program for a short time, for example, a communication line when the program is transmitted via a network such as the Internet, and a communication line such as a telephone line, as well as a medium to retains a program for a certain time, for example, a volatile memory internally provided in a computer system acting as the server and client in that case. The above-noted program may implement a part of the above-described functions, and may also implement the above-described functions in combination with a program already stored in a computer system.

Although the embodiments of the present invention have been described above with references made to the accompanying drawings, the specific constitution is not limited to the embodiments, and the present invention encompasses design changes and the like without departing from the spirit of the present invention.

### [Description of Reference Numerals]

- 100: Content providing system
- 101: Provider
- 101a: Widget distribution server
- 101b: Broadcast station
- 101c: Internet service provider
- 101d: Movie company
- 102, 102a: Digital broadcast receiving apparatus
- 104: External input device
- 104a: Recording medium
- 201: User operation receiving unit
- 202: Widget distribution server communication unit
- 203: Widget executing unit
- 204: Content receiving unit
- 204a: First content receiving unit
- 204b: Second content receiving unit
- 205: Content executing unit
- 205a: First content executing unit
- 205b: Second content executing unit
- 206: Display control unit
- 207: Video mixing unit
- 207a: First video mixing unit
- 207b: Second video mixing unit
- 208: Video outputting unit
- 208a: First video outputting unit
- 208b: Second video outputting unit
- 209: Sound mixing unit
- 210: Sound outputting unit
- 211: Display form deciding unit
- 212: Association determining unit
- 213: Executing-unit-generated information database

## Claims

1. A video outputting apparatus comprising:
a content executing unit that executes one or more contents and generates information regarding the content execution;
a subapplication executing unit that executes one or more subapplications and that generates information regarding the subapplication execution, the subapplication being an application to be executed simultaneously with the content;
an association determining unit that determines the degree of association between the subapplication currently being executed by the subapplication executing unit and the content currently being executed by the content executing unit, based on at least one of the information regarding the subapplication execution and the information regarding the content execution;
a display form deciding unit that decides a display form of the content and the subapplication, based on the degree of association;
a video mixing unit that mixes a video of the content and another video of the subapplication based on the display form decided by the display form deciding unit; and
a video outputting unit that outputs a signal of the video mixed.

2. The video outputting apparatus according to claim 1,
wherein the association determining unit determines the degree of association between the subapplication currently being executed and the content currently being executed, based on not only at least one of the information regarding the subapplication execution and the information regarding the content execution, but also information supplied by a supplier of the subapplication currently being executed and information supplied by a supplier of the content currently being executed.

3. The video outputting apparatus according to claim 1, further comprising:
a plurality of the video mixing unit; and
a plurality of the video outputting unit,
wherein the display form deciding unit decides the display form of the content and the subapplication, for each of the video outputting units, based on the degree of association; and
wherein each of the video mixing units mixes the content and the subapplication video in accordance with the display form for an associated one of the video outputting units.

4. The video outputting apparatus according to claim 1, further comprising:
an executing-unit-generated information storing unit that holds a history of the information regarding the subapplication execution, a history of the information regarding the content execution, a history of an information supplied by the supplier of the subapplication, and a history of an information supplied by the supplier of the content,
wherein the association determining unit determines the degree of association between the subapplication currently being executed and the content currently being executed, based on the informations held by the executing-unit-generated information storing unit.

5. The video outputting apparatus according to claim 1,
wherein the display form deciding unit decides the display form of the subapplication, based on not only the degree of association, but also the information regarding the subapplication execution.

6. The video outputting apparatus according to claim 1,
wherein the association determining unit determines, when the content executing unit executes the contents, the degree of association between the subapplication currently being executed by the subapplication executing unit and one of the contents, the one being mainly displayed the contents currently being executed by the content executing unit.

7. The video outputting apparatus according to claim 6, comprising:
an executing-unit-generated information storing unit that holds a history of the information regarding the subapplication execution, a history of the information regarding the content execution, a history of an information supplied by the supplier of the subapplication, and a history of an information supplied by the supplier of the content,
wherein the association determining unit determines the degree of association between the subapplication currently being executed by the subapplication executing unit and the content currently being executed by the content executing unit, based on the informations held by the executing-unit-generated information storing unit.

8. A video outputting method in a video outputting apparatus executing a content and a subapplication, which is an application to be executed simultaneously with the content, and outputting a signal of video as the result of execution, the method comprising:
a first step in which the video outputting apparatus executes one or more contents and generates information regarding the content execution;
a second step in which the video outputting apparatus executes one or more subapplications and generates information regarding the subapplication execution;
a third step in which the video outputting apparatus determines the degree of association between the subapplication currently being executed at the second step and the content currently being executed in the first step, based on at least one of the information regarding the subapplication execution and the information regarding the content execution;
a fourth step in which the video outputting apparatus decides a display form of the content and the subapplication based on the degree of the association;
a fifth step in which the video outputting apparatus mixes a video of the content and another video of the subapplication, based on the display form decided at the fourth step; and
a sixth step in which the video outputting apparatus outputs a signal the video mixed.

9. A program for having a computer, which is included in a video outputting apparatus comprising a content executing unit that executes one or more contents and generates information regarding the content execution, operate as:
a subapplication executing unit that executes one or more subapplications and generates information regarding the subapplication execution, the subapplication being an application to be executed simultaneously with the content;
an association determining unit that determines the degree of association between the subapplication currently being executed by the subapplication executing unit and the content currently being executed by the content executing unit, based on at least one of the information regarding the subapplication execution and the information regarding the content execution;
a display form deciding unit that decides a display form of the content and the subapplication based on the degree of the association;
a video mixing unit that mixes a video of the content and another video of the subapplication based on the display forms decided by the display form deciding unit; and
a video outputting unit that outputs a signal of the video mixed.
